Europäisches Patentamt

European Patent Office

Office européen des brevets

(11) Numéro de publication: **0 284 468**
**A1**

(12) **DEMANDE DE BREVET EUROPEEN**

(21) Numéro de dépôt: **88400470.6**

(22) Date de dépôt: **01.03.88**

(51) Int. Cl.⁴: **F 16 L 33/02**
**B 65 D 59/06, B 25 B 25/00**

(30) Priorité: **09.03.87 FR 8703183**

(43) Date de publication de la demande:
**28.09.88 Bulletin 88/39**

(84) Etats contractants désignés:
**AT BE CH DE ES GB GR IT LI LU NL SE**

(71) Demandeur: **Etablissements CAILLAU S.A.R.L.**
**28, rue Ernest Renan**
**F-92130 Issy-les-Moulineaux (FR)**

(72) Inventeur: **Calmettes, Lionel**
**40, rue Georges Richard**
**F-41200 Romorantin (FR)**

(74) Mandataire: **Descourtieux, Philippe et al**
**CABINET BEAU de LOMENIE 55 rue d'Amsterdam**
**F-75008 Paris (FR)**

(54) **Procédé pour faciliter le montage d'un collier de serrage et dispositif pour la mise en oeuvre du procédé.**

(57) L'invention concerne un procédé pour faciliter le montage d'un collier (2) avant son serrage sur un tube souple emmanché sur un tuyau rigide. Le collier est du type constitué par une bande métallique (2a) enroulée sur elle-même et comporte, au voisinage de ses extrémités, des organes complémentaires (3a, 3b) de serrage et/ou d'accrochage. Préalablement à l'emmanchement du tube souple sur le tuyau rigide, on fixe le collier (2) par sa périphérie extérieure dans un réceptacle (1) susceptible d'être lié au tuyau rigide. L'invention concerne également un réceptacle permettant la mise en oeuvre du procédé. Il est constitué par un manchon (4) généralement cylindrique, en matière souple. L'une de ses extrémités est pourvue d'une gorge annulaire (5) sur sa paroi intérieure, dont la profondeur est voisine de l'épaisseur de la bande métallique (2a). La paroi du manchon présente, d'autre part, une ouverture (7) destinée à permettre l'accès aux organes complémentaires (3a, 3b) de serrage et/ou d'accrochage du collier.

Fig. 1

## Description

Le raccordement étanche d'un tube souple et d'un tuyau rigide est obtenu, après emmanchement du tube souple sur le tuyau rigide, au moyen d'un collier de serrage. Ce dernier est généralement constitué par une bande métallique enroulée sur elle-même, les deux extrémités de la bande comportant des organes complémentaires d'accrochage et/ou de serrage ; il présente, d'autre part, avant sa mise en place sur le tube souple, un diamètre sensiblement supérieur à celui du tube de façon à pouvoir coulisser facilement le long de celui-ci jusqu'à l'emplacement prévu où il doit être serré.

Dans certains cas cependant, le collier est monté sur le tube souple et amené dans la position axiale qu'il devra occuper lors du serrage, préalablement à l'emmanchement du tube sur le tuyau rigide. Cette dernière opération doit alors s'accompagner d'une orientation angulaire convenable, pour que le collier puisse être ultérieurement serré.

Jusqu'à présent, les opérations d'emmanchement du tube souple sur le tuyau rigide, ainsi que la mise en place du collier, et notamment son orientation angulaire avant serrage, sont réalisées manuellement, y compris dans le cas de fabrications en grandes séries, en particulier dans la construction automobile.

Toutefois, il apparaît avantageux de permettre une automatisation plus poussée de certaines de ces opérations qui devraient être à l'avenir réalisées par des robots. Ces machines sont bien adaptées pour effectuer des déplacements rectilignes, par exemple l'emmanchement d'un tube souple sur un tuyau rigide, mais s'accommodent difficilement de la nécessité d'orienter angulairement deux organes coaxiaux l'un par rapport à l'autre. Or, on a déjà souligné plus haut que la mise en place axiale d'un collier de serrage sur un tube souple à serrer doit s'accompagner d'une orientation angulaire du collier pour que les organes complémentaires d'accrochage et/ou de serrage qu'il comporte soient ultérieurement accessibles à l'outil de serrage, qui est lui-même plus ou moins automatisé.

L'invention a donc tout d'abord pour objet un procédé pour faciliter, avant son serrage, le montage d'un collier destiné à être serré sur un tube souple emmanché sur un tuyau rigide. Par "montage" ou "mise en place" du collier, on désigne ici, aussi bien le positionnement axial du collier par rapport au tuyau rigide et au tube souple que son positionnement angulaire, compte tenu des exigences, rappelées plus haut, au moment du serrage.

Selon l'invention, on fixe le collier, par sa périphérie extérieure, dans un réceptacle susceptible d'être lié, axialement et angulairement, au tuyau rigide, préalablement au montage dudit collier sur le tube souple.

Grâce à cette disposition, l'emmanchement du tube souple sur le tuyau rigide ne nécessite aucune précaution particulière d'orientation angulaire, que cet emmanchement soit réalisé avant ou après la liaison du réceptacle au tuyau rigide. En outre, sur certaines fabrications, le réceptacle constituera avantageusement une seule pièce avec le tuyau rigide de sorte que le collier pourra être fixé à tout moment approprié dans le réceptacle.

L'invention a également pour objet un dispositif, dénommé bague de prémontage, permettant la mise en oeuvre du procédé ci-dessus défini et comportant essentiellement un réceptacle pour collier de serrage.

Selon l'invention, un tel réceptacle est essentiellement constitué par un manchon généralement cylindrique en matière souple, par exemple en matière plastique, l'une des extrémités dudit manchon étant pourvue d'une gorge, généralement annulaire, sur sa paroi intérieure, dont la profondeur est sensiblement égale et, de préférence, légèrement supérieure à l'épaisseur de la bande métallique constituant le collier. La paroi du manchon présente d'autre part, en regard de la gorge, une ouverture destinée à permettre l'accès aux organes complémentaires d'accrochage et/ou de serrage du collier.

L'invention sera mieux comprise et diverses caractéristiques secondaires, ainsi que ses avantages apparaîtront au cours de la description qui va suivre de quelques modes de réalisation, donnés uniquement à titre d'exemples. A cet effet, on se référera aux dessins annexés, dans lesquels :
- la figure 1 est une vue en perspective avec arrachement d'une bague de prémontage selon l'invention, un collier de serrage étant disposé dans son réceptacle ;
- la figure 2 est une vue en coupe avec arrachement d'un tuyau rigide muni de la bague de prémontage selon la figure 1, après emmanchement d'un tube souple destiné à être serré ;
- la figure 3 est une vue en coupe analogue à la figure 2 d'une variante de la bague de prémontage.

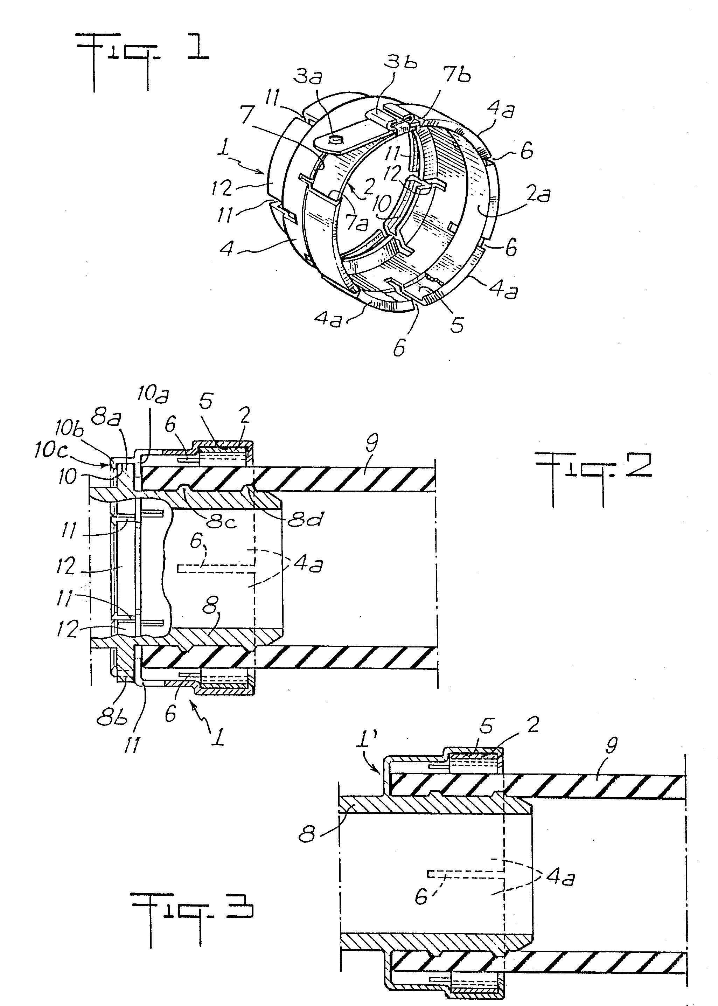

Si l'on se reporte tout d'abord à la figure 1, on voit une bague de prémontage désignée par la référence générale 1 et comportant un réceptacle destiné à recevoir un collier de serrage désigné par la référence générale 2. Un tel collier de serrage sera, par exemple, du type de ceux décrits dans les brevets européens A-E 3199 ou A-E 113624 ou encore dans la demande de brevet français 8701426. D'une façon plus générale, le collier de serrage est essentiellement constitué par une bande métallique 2a enroulée sur elle-même, ses deux extrémités étant pourvues d'organes complémentaires 3a, 3b d'accrochage et/ou de serrage.

Le réceptacle de la bague de prémontage est constitué par un manchon 4, généralement cylindrique, en matière souple, par exemple en matière plastique. A l'une de ses extrémités (à droite sur les figures 1, 2 à 3), le manchon 4 présente dans sa paroi intérieure une gorge 5, généralement annulaire. La profondeur de cette gorge, destinée à recevoir le collier 2, est voisine de l'épaisseur de la bande métallique constituant le collier. De préférence cependant, elle sera légèrement supérieure à cette épaisseur de façon que le collier y soit bien encastré et ne risque pas de quitter son réceptacle au cours des manipulations de la bague avant son montage sur un tuyau rigide.

Pour faciliter la mise en place du collier 2 dans le réceptacle, la paroi du manchon 4 présente, du côté de la gorge 5, une pluralité de fentes longitudinales 6 ouvertes vers l'extérieur. De préférence, régulièrement réparties sur la périphérie du manchon, les fentes 6 définissent dans la paroi du manchon des pattes 4a, radialement déformables.

D'autre part, ainsi qu'on le voit bien sur la figure 1, une ouverture 7 est découpée dans la paroi du manchon 4, en regard de la gorge 5 qui n'existe donc plus localement. Cette ouverture constitue un logement pour les organes complémentaires 3a, 3b d'accrochage et/ou de serrage du collier 2 qui seront ainsi accessibles par l'extérieur du manchon, lors du serrage du collier qui sera décrit plus loin.

Le collier 2 est introduit dans le réceptacle par tout moyen approprié et les pattes 4a du manchon se soulèvent jusqu'à ce que le collier ait pris place dans la gorge 5 où il est maintenu par sa périphérie extérieure. Pour des raisons qui apparaîtront plus loin, les bords 7a, 7b de l'ouverture 7 constituent des butées pour l'un au moins des organes 3b d'accrochage et/ou de serrage du collier 2. La position angulaire de ce dernier dans son réceptacle peut donc être définie de façon relativement précise par l'appui de l'un desdits organes sur l'un des bords de l'ouverture 7. D'autres moyens équivalents pourraient cependant être prévus en correspondance sur la bague 1 et le collier 2 pour assurer l'indexation angulaire de l'un par rapport à l'autre.

Du côté opposé à la gorge 5, le manchon 4 se prolonge et sa deuxième extrémité comporte des moyens, que l'on va décrire maintenant, permettant de l'assujettir à un tuyau rigide.

Si l'on se reporte en effet à la figure 2 et à la figure 3, on voit un tuyau rigide 8 sur l'extrémité libre duquel est emmanché un tube souple 9. Le tuyau rigide sera, par exemple, un embout monté sur un radiateur pour véhicule automobile, cependant que le tube souple 9 est la durite de raccordement du moteur au radiateur, assurant la circulation du liquide de refroidissement dans le moteur.

Dans l'exemple représenté sur la figure 2, le tuyau rigide 8 comporte une collerette ou épaulement 8a, qui peut être rapporté ou au contraire usiné en même temps que l'embout. L'épaulement 8a présente lui-même une légère protubérance longitudinale 8b dont l'utilité apparaîtra plus loin.

Le manchon 4 présente, quant à lui, un logement annulaire 10, à son extrémité opposée à la gorge 5. Le logement 10 est délimité par une paroi transversale interne 10a dont le diamètre intérieur est inférieur à celui du manchon 4. D'autre part, la paroi transversale externe 10b du logement est essentiellement constituée par un rebord dirigé vers l'axe du manchon et présentant une face extérieure 10c tronconique. Des fentes longitudinales 11, ouvertes vers l'extérieur, et de préférence angulairement réparties de façon régulière, sont ménagées dans la paroi du manchon et définissent, dans la zone du logement 10, une pluralité de pattes déformables 12.

L'utilisation de la bague de prémontage s'effectue de la façon suivante.

En général, le collier 2 aura été placé dans la gorge 5 de la façon décrite plus haut. La bague 1 est alors engagée, par son extrémité opposée à celle recevant le collier, sur l'extrémité libre de l'embout 8, à gauche sur la figure 2. Lorsque la paroi externe 10b du logement 10 rencontre l'épaulement 8a, les pattes 12 se soulèvent jusqu'à ce que la paroi externe soit clipsée derrière l'épaulement, la paroi interne 10a venant alors en appui sur ce dernier. Au cours de cette première opération, la bague de prémontage est positionnée axialement par rapport au tuyau rigide 8, dont l'épaulement 8a est disposé à l'intérieur du logement 10.

La bague de prémontage 1 peut cependant encore tourner sur le tuyau rigide jusqu'à ce que la protubérance 8b de l'épaulement soit coiffée par l'une des fentes 12. Bien entendu, on peut prévoir sur la bague de prémontage tout autre moyen d'indexation angulaire pour coopérer avec la protubérance 8b. Plus généralement, la bague de prémontage 1 et le tuyau rigide 8 comporteront des moyens complémentaires permettant d'assurer l'indexation angulaire de l'un par rapport à l'autre.

Ainsi qu'on l'a indiqué plus haut, le collier 2 est indexé angulairement par rapport à la bague de prémontage 1, de sorte qu'après mise en place de cette dernière sur le tuyau 8 le collier 2 se trouve positionné, aussi bien axialement qu'angulairement, par rapport à celui-ci.

Le tube souple 9 peut ensuite être emmanché sur l'embout rigide 8 sans qu'aucune précaution d'indexage angulaire ne soit à prendre. En particulier, l'emmanchement peut être réalisé par des machines automatiques du genre robot. En général, le tube atteindra sa position finale sur l'embout lorsque son extrémité libre viendra en appui sur la paroi interne 10a du logement 10 de la bague de prémontage ou à proximité immédiate de cette paroi.

Le collier 2 peut alors être serré par les moyens habituels décrits dans les brevets cités plus haut, ou par tout autre moyen approprié aux organes complémentaires 3a, 3b d'accrochage et/ou de serrage. En particulier, là encore, on peut utiliser des machines automatiques du genre robot, puisque la position des organes complémentaires 3a, 3b est parfaitement définie grâce à l'indexation angulaire par rapport à l'embout 8, décrite plus haut.

On soulignera encore que, grâce à l'invention, le collier 2 sera toujours bien positionné axialement par rapport à l'embout 8, notamment si ce dernier comporte, comme on l'a représenté sur la figure 2, des nervures 8c et 8d destinées aussi bien à améliorer l'étanchéité du raccordement qu'à empêcher tout glissement du tube 9 sur le tuyau 8, après serrage du collier. Ce dernier n'a pas pu en effet être déplacé axialement au cours de l'emmanchement du tube sur le tuyau puisqu'il est retenu par sa périphérie extérieure dans la bague de prémontage 1 et que son diamètre avant serrage peut être notablement supérieur au diamètre extérieur du tube 9.

Si l'on se reporte maintenant à la figure 3, on voit une variante de réalisation de la bague de prémontage qui a été décrite précédemment. Les mêmes éléments que ceux déjà décrits portent les mêmes références, la bague de prémontage étant elle-même désignée par la référence 1'. Ainsi qu'on le voit, la bague 1' constitue une seule pièce avec le tuyau rigide 8 (ou embout). Cette disposition sera avantageusement utilisée lorsque l'embout est moulé en matière plastique, mais pourrait également se révéler intéressante dans le cas où il serait usiné.

De toute façon, l'indexage angulaire de la bague 1' est obtenu sans moyen particulier puisqu'il n'est plus nécessaire de prévoir un logement pour un épaulement du tuyau.

En revanche, à son extrémité libre, la bague 1' comporte une gorge 5, tout à fait analogue à celle qui a été décrite plus haut, pour recevoir le collier 2 et le maintenir par sa périphérie extérieure.

Après fabrication de l'embout 8 et de la bague 1', on y place le collier 2 de la façon décrite plus haut, en général avant l'emmanchement du tube 9 sur l'embout. Le collier 2 peut lui-même être indexé angulairement par rapport à la bague 1', si cela se révèle utile. Les opérations de serrage du collier sont analogues à celles qui ont déjà été décrites et les avantages qui résultent de l'invention sont conservés par ce mode de réalisation de la bague de prémontage.

## Revendications

1. Procédé pour faciliter le montage et le positionnement angulaire d'un collier (2) avant son serrage sur un tube souple (9) emmanché sur un tuyau rigide (8), un tel collier étant du type constitué par une bande métallique (2a) enroulée sur elle-même et comportant, au voisinage de ses extrémités, des organes complémentaires (3a, 3b) de serrage et/ou d'accrochage, caractérisé en ce que, de préférence préalablement à l'emmanchement du tube souple (9) sur le tuyau rigide (8), on fixe le collier (2) par sa périphérie extérieure dans un réceptacle (1-1') susceptible d'être lié au tuyau rigide (8).

2. Réceptacle pour collier de serrage permettant la mise en oeuvre du procédé selon la revendication 1, caractérisé en ce qu'il est constitué essentiellement par un manchon (4) généralement cylindrique, en matière souple, par exemple en matière plastique, l'une des extrémités dudit manchon étant pourvue d'une gorge annulaire (5) sur sa paroi intérieure, dont la profondeur est voisine et de préférence au moins égale à l'épaisseur de la bande métallique (2a) constituant le collier, la paroi du manchon présentant, d'autre part, une ouverture (7) en regard de ladite gorge, destinée à permettre l'accès aux organes complémentaires (3a, 3b) de serrage et/ou d'accrochage du collier.

3. Réceptacle selon la revendication 2, caractérisé en ce que la paroi du manchon (4) présente, du côté de l'extrémité pourvue de la gorge (5), une pluralité de fentes longitudinales (6) ouvertes vers l'extérieur, de préférence angulairement réparties de façon régulière, pour définir, à ladite extrémité du manchon, une pluralité de pattes (4a) radialement déformables.

4. Réceptacle selon l'une quelconque des revendications 2 et 3, caractérisé en ce que, à son extrémité opposée à la gorge (5) de réception du collier, le manchon (4) comporte des moyens d'assujettissement à un tuyau rigide (8) sur lequel un tube souple (9) est susceptible d'être emmanché.

5. Réceptacle selon la revendication 4, caractérisé en ce que l'extrémité du manchon (4) opposée à la gorge (5) de réception du collier (2) comporte un logement annulaire (10) coaxial au manchon et ouvert vers l'intérieur de ce dernier, dont le diamètre intérieur est inférieur à celui du manchon.

6. Réceptacle selon la revendication 5, caractérisé en ce que l'extrémité du manchon, équipée du logement annulaire (10), présente une pluralité de fentes longitudinales (11) ouvertes vers l'extérieur, de préférence angulairement réparties de façon régulière, pour définir à ladite extrémité du manchon une pluralité de pattes (12) radialement déformables.

7. Réceptacle selon la revendication 5, caractérisé en ce qu'il comporte, de préférence dans la région du logement (10), des moyens destinés à coopérer avec des moyens complémentaires prévus en correspondance sur le tuyau rigide, pour assurer l'indexation angulaire de l'un par rapport à l'autre.

8. Réceptacle selon les revendications 6 et 7, caractérisé en ce que l'une au moins des fentes (11) du manchon (4) peut coopérer avec au moins une protubérance (8b) prévue sur un épaulement (8) du tuyau rigide, destiné à être engagé dans le logement (10) du manchon (4).

9. Réceptacle selon l'une quelconque des revendications 2 et 3, caractérisé en ce que le manchon (4) constitue une pièce unique avec le tuyau rigide (8), son extrémité libre portant la gorge (5) destinée à recevoir le collier (2).

0284468

Fig. 1

Fig. 2

Fig. 3

Office européen
des brevets

# RAPPORT DE RECHERCHE EUROPEENNE

Numero de la demande

EP  88 40 0470

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 446 568  (BOSCH-SIEMENS)<br>* Figures 2-9; page 4, lignes 8-28 *<br>--- | 1,4,9 | F 16 L   33/02<br>B 65 D   59/06<br>B 25 B   25/00 |
| A | US-A-4 592 575  (HUGHES et al.)<br>* Figures; abrégé *<br>--- | 1,2 | |
| A | US-A-3 463 517  (L.B. COURTOT et al.)<br>* Figures; abrégé *<br>----- | 1,4,6,8 | |

| DOMAINES TECHNIQUES RECHERCHES (Int. Cl.4) |
|---|
| F 16 L<br>B 65 D<br>B 25 B<br>B 23 P |

Le présent rapport a été établi pour toutes les revendications

| Lieu de la recherche | Date d'achèvement de la recherche | Examinateur |
|---|---|---|
| LA HAYE | 10-06-1988 | NARMINIO A. |